# NEW EUROPEAN PATENT SPECIFICATION

(11) **EP 0 355 303 B2**
(45) Date of publication and mention of the opposition decision: **20.12.1995**
(45) Mention of the grant of the patent: 01.04.1992
(21) Application number: 89111129.6
(22) Date of filing: 19.06.1989
(51) Int. Cl.: B01J 8/04, C01C 1/04

(54) **Reactor for exothermic heterogeneous synthesis with several catalytic beds and with the external recovery of reaction heat**
Reaktor für die exotherme heterogene Synthese mit Hilfe verschiedener katalytischer Betten und mit externer Rückgewinnung der Reaktionswärme
Réacteur de synthèse hétérogène exothermique en utilisant plusieurs lits catalytiques avec la récupération externe de la chaleur de réaction

(30) Priority: 27.06.1988 CH 2457/88
(43) Date of publication of application: 28.02.1990
(73) Proprietor: AMMONIA CASALE S.A., CH-6900 Lugano-Besso (CH); Zardi, Umberto, CH-6932 Breganzona (Ti) (CH)
(72) Inventor: Zardi, Umberto, CH-6932 Breganzona (CH); Pagani, Giorgio, CH-6900 Lugano (CH)
(74) Representative: Finck, Dieter, Dr.Ing.

(56) References cited:
- EP-A- 0 237 888
- EP-A- 0 269 854
- DE-A- 2 815 856
- FR-A- 2 183 985
- GB-A- 1 601 475

## Description

The invention relates to a reactor for an exothermic heterogeneous synthesis comprising an outer pressure resisting shell, a cartridge mounted in the shell such that a space is provided between the inner wall of the shell and the external wall of the cartridge, several baskets for catalytic beds separately stacked in the cartridge such that synthesis gas leaving one catalytic bed runs through the next catalytic bed, an external regenerator provided outside the shell, transfer means for collecting and transferring hot gas reacted in the penultimate catalytic bed to the regenerator, the hot gas entering the penultimate catalytic bed being previously reacted in the catalytic beds above the penultimate catalytic bed, returning means for returning the gas into the shell after recovering heat in the regenerator, and expelling means provided at the bottom of the shell for expelling the gas out of the bottom of the shell.

In the production of ammonia the amount of heat which develops from the synthesis reaction of N2+3H2 is remarkable, such heat heing generally recovered for the final purpose of producing steam used in the production cycle in order to reduce energy consumption.

The latest technologies aim at the maximum recovery of said synthesis heat at the highest degree of heat possible; synthesis units and their principal piece of equipment, the reactor are therefore suitably designed for this purpose.

In newly built plants the reactors have several catalytic beds with intermediate cooling of the gas by means of indirect exchange through heat exchangers; besides, part of the reaction heat is removed with an external cooling agent such as for example the feed water to the boiler or by generating steam, before the last reaction stage, in order to be able to operate at the maximum temperature possible (heat recovery at the highest degree of heat) without any limitation to the maximum reaction yield achievable.

Maximum temperature together with maximum yield are in effect two contrasting requirements, as is widely demonstrated by the diagrams which show in abscissa the concentration of ammonia and in ordinate the temperature of the gas.

The most important designers of synthesis reactors have generally favoured reactors with several catalytic beds in at least two distinct apparatus units in series, in order to satisfy the above-mentioned need for the optimal exchange of reaction heat (at the highest degree of heat possible) without limiting the maximum yield achievable (Fertilizer Focus, October 1987).

In the case of two separate items or units of equipment, the first of these contains generally two catalytic beds with intermediate indirect cooling by means of an internal exchanger, while the second item or unit of equipment generally contains a single catalytic bed.

Between the two items of equipment heat exchange is achieved by introducing a boiler to produce steam. This is the case for the Topsoe Series 250 (Series 200 1 Series 50) reactor and for the Uhde reactor, both with radial flow of the gas in the catalytic beds (Fertilizer Focus, October 1987, pages 36 and 39).

There are also reactors designed in three separate parts, each containing a catalytic bed with axial gas flow according to the design by C.F. Braun (Nitrogen Conference, Amsterdam 1986). In this case a boiler for the production of steam is introduced between the second and the third reaction unit (Nitrogen Conference, Amsterdam 1986, Mr. K.C. Wilson, Mr. B.J. Grotz and Mr. J. Richez of CdF Chimie).

According to a recent patent by CF Braun (UK Patent Application 2132501A), the gas/gas exchanger between catalytic beds, which is normally conveniently situated inside the reactors with at least two beds within a single unit, is situated outside the reaction unit directly connected at the bottom of the shell containing a single catalytic bed.

To minimize the problem of tubes at a high temperature, the tube connecting the above-mentioned horizontal exchanger with the shell containing the catalytic bed is cooled by the fresh gas fed to the reactor.

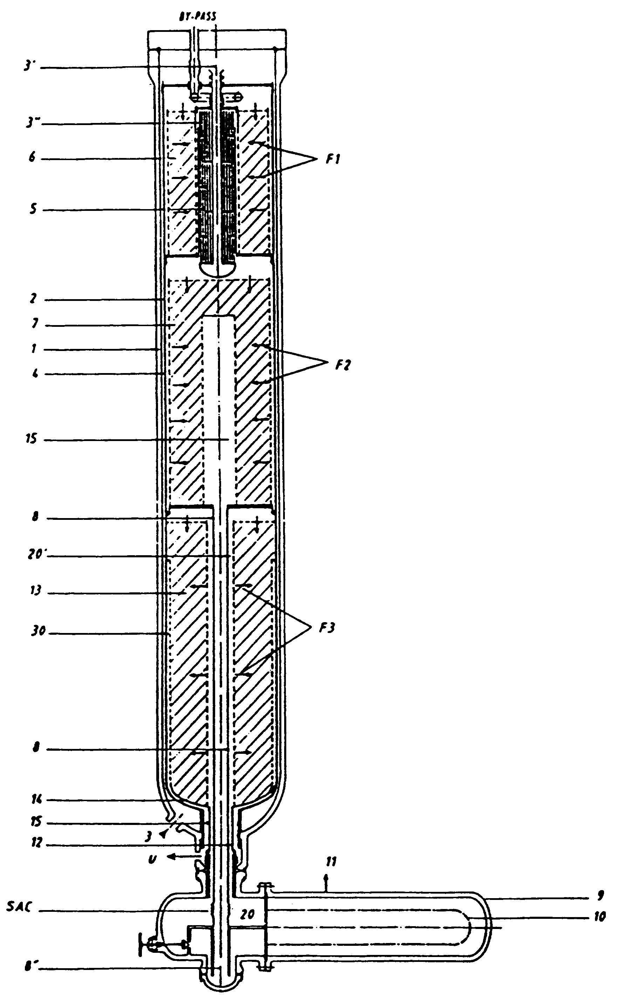

After having pre-heated the fresh feed gas, the gas leaving the catalytic bed leaves the exchanger and feeds the unit containing the second catalytic bed (CF Braun reactor with several reaction units, as shown in Figure 5 of the Wilson, Gritz, Richez report in the above-mentioned reference and on page 48 of Fertilizer Focus, October 1987).

The problem solved in the above-mentioned CF Braun Patent, i.e. the avoidance of high temperature gas coming into contact with the tubes connecting shell and exchanger, does not exist in reactors with several catalytic beds in a single unit since, as mentioned above, the gas/gas exchanger is located directly inside the reactor itself.

Still according to CF Braun the problem of optimal recovery of heat is solved in a complex way by introducing a boiler connected by a complex tube arrangement to the reactor itself (see Figure 5 in the CF Braun Nitrogen ′86 presentation and Fertilizer Focus October 1987, page 48).

All the above designs, although they solve the thermodynamic problem, are very complex and therefore very expensive.

Ammonia synthesis reactors operate in fact at high pressure, generally not below 80 bar, and more often between 130 and 250 bar, and at a high temperature (400 ÷ 500°C). The connecting tubes of the various items of equipment necessary according to the schemes described above (as schematically shown in the above-mentioned references) operate under critical conditions (high gas temperature between the various reaction beds) and must therefore be made of special material and with long runs to minimize mechanical stress produced by thermal expansion. The situation is particularly complex in reactors according to CF Braun, in spite of the measures taken according to the CF Braun UK application No. 2132501A

In DE 28 15 856 A1 a reactor for an exothermic heterogeneous synthesis is disclosed having three axial parallel bed sets. Two of the bed sets are mounted in a first shell and the last bed set is mounted in a second shell. The very hot gas leaving the second bed set is fed via an outlet in the bottom of the first shell into a boiler in which it is cooled in heat exchange with pressurized boiler feed water and then fed in the last bed set in the second shell. Since the gas leaving the first shell is very hot (470 to 490°C) special heat resistant materials are to be used for the outlet of the first shell. These materials are not only very expensive, but also technically unreliable and deteriorate rapidly. Further, the construction of the known reactor is complicated as two shells are provided.

In another embodiment of the reactor of DE 28 15 856 A1 all three bed sets are mounted in a common shell.

The problem underlying the invention is to provide a reliable reactor for an exothermic heterogeneous synthesis having a high heat recovery rate without the use of high temperature resistant materials.

Starting out from the reactor of the generic kind this problem is solved in that the penultimate bed is formed such that the hot gas in the penultimate catalytic bed flows in a centripetal radial direction, the transfer means is formed by a central duct mounted axially in the shell and communicating with the regenerator, the returning means is formed by an outer duct feeding directly the last catalytic bed and mounted coaxially to the central duct such that an annular space is provided between the central duct and the outer duct, and the last catalytic bed is formed such that the gas flows therein in a centrifugal direction and is collected at the outer periphery thereof.

In a preferred embodiment of the invention the last catalytic bed comprises a double bottom such that a space is provided which communicates with the outer periphery of the last catalytic bed and the expelling means.

In the reactor of the invention the gas leaving the penultimate catalytic bed, the temperature of which is higher than the temperature of the last catalytic bed, is fed to the regenerator. Thus the heat recovery rate is high. The hot gas leaving the penultimate catalytic bed is fed through the central duct, which is surrounded by the outer duct. The hot gas leaving the penultimate bed does not contact the outlet of the shell. The outlet of the shell is cooled by the gas leaving the regenerator. Furthermore, the construction of the central duct and the outer duct is very compact. Thus, both ducts can be mounted in the central part of the last catalytic bed.

An embodiment of the invention is explained in detail by means of the accompanying figure which shows a reactor for an exothermic heterogeneous synthesis.

The reactor consisting of shell (1) and of cartridge (2) forming the catalytic beds (in this case three, 6, 7, 13) is fed the fresh gas (3) entering from the bottom of the reactor and flowing from the bottom towards the top along the space (4) between the internal wall of the shell (1) and the cartridge (2) external wall, for the purpose of reducing to a minimum the temperature of the shell.

The gas (3′) leaving said space at the upper end of the cartridge containing said three catalytic beds enters the tubes of the gas/gas exchanger (5) situated in the central part of the first catalytic bed (6), where it is pre-heated with the heat from the hot gas (3˝) coming from the first catalytic bed (6), said bed being run through by the gas with a centripetal flow (Arrows F1).

The hot gas, after having run along the exchanger (5) on the outside of the tubes, feeds the second catalytic bed (7) running through the bed still with an inward flow (Arrows F2).

The operation of a catalytic bed with indirect exchanger (5) is described in greater detail in the Applicant's US Patent No. 4,405,562.

The hot gas reacted in the second catalytic bed (7) is collected in 15 and is transferred through a central duct (8) situated axially to the reactor into 8′, directly to the heat transfer system (SAC) which is preferably a tube nest (9) with U-shaped tubes (10) where part of the reaction heat is removed by generating steam (11). The gas (20′), after the heat has been removed, returns directly to the reactor through a duct (12) outside the said transfer duct (8), said gas (20′) feeding directly the last catalytic bed (13) running through it with an outward flow (Arrows F3).

The hot reacted gas leaving the bed (13) is then collected in the peripheral external area (30) of said bed and is again transferred to the central part of the reactor running through the airspace (14) of the double bottom of the last catalytic bed, leaving then from the bottom of the reactor through duct (15) (Arrows U).

The system for the recovery of heat according to this invention can also be adopted in reactors with catalytic beds in which the gas flow is entirely radial.

The system according to this invention can also be used in reactors operating at a lower pressure where there is no space (4) as shown in the Figure, and the catalytic beds are directly in contact with the internal wall of the reactor shell (1). In this case the hot reacted gas leaving the bed (13) is then sent again to the central part of the reactor through the airspace (14) formed between the bottom of the last catalytic bed and the shell.

The system according to this invention can also be used to modernize reactors for example according to the Applicant's European Patent Publication No. 0202454.

## Claims

1. Reactor for an exothermic heterogeneous synthesis comprising
- an outer pressure resisting shell (1),
- a cartridge (2) mounted in the shell (1) such that a space (4) is provided between the inner wall of the shell (1) and the external wall of the cartridge (2),
- several baskets for catalytic beds (6, 7, 13) separately stacked in the cartridge (2) such that synthesis gas leaving one catalytic bed (6, 7) runs through the next catalytic bed (7, 13),
- an external regenerator (SAC) provided outside the shell (1),
- transfer means (8) for collecting and transferring hot gas reacted in the penultimate catalytic bed (7) to the regenerator (SAC), the hot gas entering the penultimate catalytic bed (7) being previously reacted in the catalytic beds (6) above the penultimate catalytic bed (7),
- returning means for returning the gas into the shell (1) after recovering heat in the regenerator (SAC), and
- expelling means (15) provided at the bottom of the shell (1) for expelling the gas out of the bottom of the shell (1),
characterized in that
- the penultimate bed (7) is formed such that the hot gas in the penultimate catalytic bed (7) flows in a centripetal radial direction.
- the transfer means is formed by a central duct (8) mounted axially in the shell (1) and communicating with the regenerator (SAC),
- the returning means is formed by an outer duct (12) feeding directly the last catalytic bed (13) and mounted coaxially to the central duct (8) such that an annular space is provided between the central duct (8) and the outer duct (12), and
- the last catalytic bed (13) is formed such that the gas flows therein in a centrifugal direction and is collected at the outer periphery (30) thereof.

2. Reactor according to claim 1, characterized in that the last catalytic bed (13) comprises a double bottom such that a space (14) is provided which communicates with the outer periphery (30) of the last catalytic bed (13) and the expelling means (15).

## Patentansprüche

1. Reaktor zur heterogenen exothermen Synthese mit
- einem äußeren druckfesten Mantel (1),
- einem Einsatz (2), der in dem Mantel (1) so angebracht ist, daß ein Zwischenraum (4) zwischen der Innenwand des Mantels (1) und der Außenwand des Einsatzes (2) vorgesehen ist,
- mehreren Körben für katalytische Betten (6, 7, 13), die in dem Einsatz (2) getrennt übereinander so angeordnet sind, daß ein ein katalytisches Bett (6, 7) verlassendes Synthesegas durch das nächste katalytische Bett (7, 13) strömt,
- einem äußeren, außerhalb des Mantels (1) vorgesehenen Regenerator (SAC),
- einer Überführungseinrichtung (8) zur Sammlung und Überführung des in dem vorletzten katalytischen Bett (7) reagierten heißen Gases zu dem Regenerator (SAC), wobei das in das vorletzte katalytische Bett (7) eintretende heiße Gas zuvor in den katalytischen Betten (6) oberhalb des vorletzten katalytischen Bettes (7) reagiert wurde,
- einer Rückführeinrichtung zur Rückführung des Gases in den Mantel (1), nachdem Wärme in dem Regenerator (SAC) wiedergewonnen wurde, und
- einer Auslaßeinrichtung (15), die an dem Boden des Mantels (1) für einen Auslaß des Gases aus dem Boden des Mantels (1) vorgesehen ist,
dadurch gekennzeichnet, daß
- das vorletzte Bett (7) so ausgebildet ist, daß das heiße Gas in dem vorletzten katalytischen Bett (7) in einer zentripetalen radialen Richtung strömt,
- die Überführungseinrichtung von einem zentralen Rohr (8) gebildet wird, das axial in dem Mantel (1) angebracht ist und mit dem Regenerator (SAC) in Verbindung steht,
- die Rückführeinrichtung von einem äußeren Rohr (12) gebildet wird, das direkt in das letzte Katalysatorbett (13) zuführt und koaxial in dem zentralen Rohr (8) so angeordnet ist, daß zwischen dem zentralen Rohr (8) und dem äußeren Rohr (12) ein Ringraum vorhanden ist, und
- das letzte katalytische Bett (13) so ausgebildet ist, daß das Gas darin in einer zentrifugalen Richtung strömt und an seinem Außenumfang (30) gesammelt wird.

2. Reaktor nach Anspruch 1, dadurch gekennzeichnet, daß das letzte katalytische Bett (13) einen doppelten Boden aufweist, so daß ein Zwischenraum (14) vorgesehen ist, der mit dem Außenumfang (30) des letzten Katalysatorbettes (13) und der Auslaßeinrichtung (15) in Verbindung steht.

## Revendications

1. Réacteur pour la synthèse hétérogène exothermique comprenant:
- une virole externe (1) résistant à la pression,
- une cartouche (2) montée dans la virole, de sorte qu'un espace (4) soit formé entre la paroi interne de la virole (1) et la paroi externe de la cartouche (2),
- plusieurs paniers pour lits catalytiques (6, 7, 13) disposés de façon séparée les uns sur les autres dans la cartouche (2), de façon que le gaz de synthèse quittant un lit catalytique (6,7) passe sur le lit catalytique suivant (7,13),
- un régénérateur externe (SAC) disposé à l'extérieur de la virole (1),
- des moyens de transfert (8) pour recueillir et transférer vers le régénérateur des gaz chauds ayant réagi dans l'avant-dernier lit catalytique (7), les gaz chauds entrant dans l'avant-dernier lit catalytique (7) ayant été amenés préalablement à réagir dans les lits catalytiques (6) situés au-dessus de l'avant-dernier lit catalytique (7),
- des moyens de retour pour envoyer le gaz dans la virole (1) après récupération de sa chaleur latente dans le régénérateur et des moyens d'expulsion pour évacuer le gaz de cuve de la virole,
caractérisé en ce que
- l'avant-dernier lit (7) est réalisé de façon que le gaz chaud de l'avant-dernier lit catalytique (7) circule selon une direction radiale centripète,
- les moyens de transfert sont formés d'un conduit central (8) disposé de façon axiale dans la virole et communiquant avec le régénérateur,
- les moyens de retour sont formés d'un conduit externe (12) alimentent directement le dernier catalytique (13) et montés de façon coaxiale par rapport au conduit central (8) de façon à former un espace annulaire entre le conduit central (8) et le conduit externe (12), et
- le dernier lit catalytique (13) est formé de façon que le gaz y circule selon une direction centrifuge et soit recueilli à son extrémité périphérique (30).

2. Réacteur selon la revendication 1, caractérisé en ce que le dernier lit catalytique (13) comprend un double fond tel que soit formé un espace (14) qui communique avec la périphérie externe (30) du dernier lit catalytique (13) et comprend des moyens d'évacuation (15).
